# EUROPÄISCHE PATENTSCHRIFT

(11) **EP 2 478 619 B1**
(45) Veröffentlichungstag und Bekanntmachung des Hinweises auf die Patenterteilung: **28.01.2015**
(21) Anmeldenummer: 10757162.2
(22) Anmeldetag: 30.08.2010
(51) Int. Cl.: H02K 7/18, H02K 21/44

(54) **WIND- ODER WASSERENERGIEANLAGE**
WIND OR WATER ENERGY INSTALLATION
INSTALLATION EXPLOITANT L'ÉNERGIE ÉOLIENNE OU HYDRAULIQUE

(30) Priorität: 17.09.2009 EP 09075430; 03.03.2010 EP 10075096
(43) Veröffentlichungstag der Anmeldung: 25.07.2012
(73) Patentinhaber: Venpower GmbH, 16835 Rüthnick (DE)
(72) Erfinder: HEIN, Peter, 16835 Rüthnick (DE)
(74) Vertreter: Fischer, Uwe
(86) Internationale Anmeldenummer: PCT/EP2010/005608
(87) Internationale Veröffentlichungsnummer: WO 2011/032675

(56) Entgegenhaltungen:
- WO-A1-2008/119055
- DE-A1-102006 013 590
- US-A- 5 844 341

## Beschreibung

Die Erfindung bezieht sich auf eine Wind- oder Wasserenergieanlage mit den Merkmalen gemäß dem Oberbegriff des Anspruchs 1.

Eine Windenergieanlage mit den Merkmalen gemäß dem Oberbegriff des Patentanspruchs 1 ist aus der deutschen Offenlegungsschrift DE 10 2006 013 590 A1 bekannt.

Andere elektrische Maschinen sind aus der internationalen Patentanmeldung WO 2008/119055 A1 und dem US-Patent US 5,844,341 bekannt.

Die Gewinnung von Elektroenergie aus Wind erfolgt seit vielen Jahren mit Hilfe von immer größer werdenden Windrädern. Die erzielbaren Leistungen sind unter anderem vom Durchmesser des Windrades abhängig. Größere Leistungen bedeuten damit auch größere Windraddurchmesser und größere Propellerblattlängen. Da die Umfangsgeschwindigkeit der Propellerspitzen technisch begrenzt ist, ergeben sich immer geringere Drehzahlen.

Der Erfindung liegt die Aufgabe zugrunde, eine Wind- oder Wasserenergieanlage anzugeben, die große elektrische Leistungen generieren kann, aber dennoch einen einfachen und leichten Aufbau aufweist.

Diese Aufgabe wird erfindungsgemäß durch eine Wind- oder Wasserenergieanlage mit den Merkmalen gemäß Patentanspruch 1 gelöst. Vorteilhafte Ausgestaltungen der erfindungsgemäßen Wind- oder Wasserenergieanlage sind in Unteransprüchen beschrieben.

Ein wesentlicher Vorteil der erfindungsgemäßen Wind- oder Wasserenergieanlage ist darin zu sehen, dass der Stator aus separaten Statormodulen gebildet ist; dies ermöglicht eine besonders einfache Montage des Stators, insbesondere in großer Höhe über dem Boden, wie sie bei Windkraftanlagen üblich ist. Für eine Montage des Stators muss also nicht, wie bei vorbekannten Wind- oder Wasserenergieanlagen, der gesamte Stator insgesamt transportiert und montiert werden, vielmehr kann, beispielsweise mit einem Kran, Statormodul für Statormodul zum jeweiligen Montageplatz gebracht und vor Ort montiert werden.

Ein weiterer wesentlicher Vorteil der erfindungsgemäßen Windoder Wasserenergieanlage besteht darin, dass im Falle eines Defekts ein Austausch von einzelnen Statormodulen möglich ist. Es muss also nicht der gesamte Stator ausgewechselt werden, wodurch im Reparaturfall Kosten eingespart werden können.

Ein zusätzlicher Vorteil der erfindungsgemäßen Wind- oder Wasserenergieanlage wird darin gesehen, dass alle Bauteile, die sich während des Betriebs des Generators erwärmen und ggf. gekühlt werden müssen, damit Grenztemperaturen nicht überschritten werden, im Stator des Generators angeordnet werden können. Eine Kühlung des Stators von außen ist technisch relativ einfach und kostengünstig durchführbar. Die im Rotor angeordneten flussführenden Teile und Elemente, die sich durch Ummagnetisierung oder Wirbelströme erwärmen können und auch durch den Stator durch Wärmeübergang und/oder Strahlung erwärmt werden können, können bei der erfindungsgemäßen Windoder Wasserenergieanlage durch temperaturunkritische Teile gebildet werden, so dass sie keiner zusätzlichen Kühlung bedürfen. Mit anderen Worten besteht ein wesentlicher Vorteil der erfindungsgemäßen Wind- oder Wasserenergieanlage auch darin, dass lediglich Statorabschnitte gekühlt werden müssen und eine Kühlung des Rotors unterbleiben kann, selbst wenn sehr hohe elektrische Leistungen erzeugt werden.

Die statorseitigen Spulen der Statormodule lassen sich beispielsweise elektrisch zusammenschalten, um je nach der Ausführung des elektrischen Energieversorgungsnetzes, an das die Wind- oder Wasserenergieanlage angeschlossen wird, die entsprechenden Ströme oder Spannungen bereitstellen zu können.

Bei der Wind- oder Wasserenergieanlage handelt es sich vorzugsweise um eine Anlage, die eine Nennleistung von mindestens 1 kW aufweist. Eine solche Nennleistung ist in aller Regel erforderlich, um einen wirtschaftlichen Einsatz in Energieübertragungsnetzen zu ermöglichen.

Die Statormodule sind vorzugsweise derart ausgestaltet, dass sie jeweils unabhängig von anderen Statormodulen aus dem Generator ausgebaut und in diesen eingebaut werden können sowie unabhängig von anderen Statormodulen ausgetauscht werden können.

Auch wird es als vorteilhaft angesehen, wenn die Statormodule jeweils eine Montagccinrichtung aufweisen, mit der sich der Abstand zwischen dem jeweiligen Statormodul und dem Rotor modulindividuell einstellen lässt.

Mit Blick auf geringe Baukosten wird es als vorteilhaft angesehen, wenn die Statormodule des Stators baugleich sind.

Der Rotor weist vorzugsweise auf seiner den Statormodulen zugewandten Oberfläche einen von seinem jeweiligen Rotationswinkel abhängigen magnetischen Widerstand (Rm) auf, so dass die Größe des magnetischen Flusses in den Spulen der Statormodule von dem jeweiligen Rotationswinkel des Rotors abhängig ist und sich bei Rotation des Rotors ändert.

Die Magnete der Statormodule werden vorzugsweise durch Permanentmagneten gebildet. Alternativ können anstelle von Permanentmagneten oder in Kombination mit Permanentmagneten auch Elektromagneten zur Erzeugung eines magnetischen Flusses eingesetzt werden.

Die Anordnung der Statormodule um die Drehachse des Rotors ist bevorzugt drehsymmetrisch.

Der Rotor kann beispielsweise außen um den Stator herum oder innerhalb des Stators angeordnet sein.

Ein Propeller der Wind- oder Wasserenergieanlage ist vorzugsweise mit dem Rotor des Generators drehfest verbunden. Auf ein Getriebe zwischen Rotor und Propeller kann somit verzichtet werden, so dass Gewicht und Kosten minimiert werden.

Um eine mehrphasige, beispielsweise dreiphasige, Stromerzeugung zu ermöglichen, wird es als vorteilhaft angesehen, wenn der Drehsymmetriewinkel der Anordnung der Statormodule des Stators und der Drehsymmetriewinkel der örtlichen Verteilung des magnetischen Widerstands auf dem Rotor unterschiedlich sind. Ein Drehsymmetriewinkelunterschied führt zu einer unterschiedlichen Polteilung auf dem Stator und dem Rotor, so dass sich elektrischer Strom für Mehrphasensysteme generieren lässt.

Selbstverständlich können der Drehsymmetriewinkel des Stators und der des Rotors auch identisch sein, wenn lediglich eine einzige Strom- und Spannungsphase erzeugt werden soll. Vorzugsweise weist der Rotor auf seiner dem Stator zugewandten Oberfläche sich radial nach außen erstreckende Zähne auf. Mit Hilfe einer Zahnstruktur bzw. eines Zahnprofils lässt sich in besonders einfacher Weise ein vom jeweiligen Rotationswinkel des Rotors abhängiger magnetischer Widerstand an der Oberfläche des Rotors hervorrufen. Die Zähne an der Oberfläche des Rotors bestehen vorzugsweise aus einem Material mit einem geringen magnetischen Widerstand, also aus einem Material, das bei Anliegen eines magnetischen Feldes einen großen magnetischen Fluss hervorruft. Für die Zähne geeignetes Material ist beispielsweise ferromagnetisches Material, da dieses eine sehr hohe Permeabilitätszahl aufweist.

Der Zwischenraum zwischen benachbarten Zähnen des Stators kann beispielsweise ganz oder teilweise mit einem Material gefüllt sein, das einen größeren magnetischen Widerstand als das Material der Zähne aufweist. Beispielsweise kann der Zwischenraum zwischen benachbarten Zähnen mit einem Kunststoff oder einem Harz gefüllt sein.

Als besonders vorteilhaft wird es jedoch angesehen, wenn der Zwischenraum zwischen benachbarten Zähnen frei bleibt, da bei einer Rotation des Rotors freiliegende Zähne zu einer Luftverwirbelung im Luftspalt zwischen Stator und Rotor führen, wodurch eine Kühlung von Rotor und Stator hervorgerufen wird.

Besonders bevorzugt weist jedes Statormodul jeweils ein flussführendes Element auf, das durch die zumindest eine statorseitige Spule hindurchgeführt ist, wobei die Querschnittsfläche des flussführenden Elements im Spulenbereich kleiner als die Querschnittsfläche des statorseitigen Magneten ist. Bei einer solchen Ausgestaltung der Querschnitte kommt es zu einer Flusskonzentration im Bereich der statorseitigen Spule.

In entsprechender Weise kann vorgesehen sein, dass das flussführende statorseitige Element im Spulenbereich kleiner als im Bereich seiner Schenkelenden ist, mit denen es die Schnittstelle zum Rotor bildet. Auch bei dieser Ausgestaltung kommt es zu einer Flusskonzentration im Spulenbereich, wobei jedoch an der Schnittstelle zwischen Rotor und Stator das Luftspaltfeld beeinflusst werden kann.

Um die Feldlinien in einer möglichst optimalen Weise durch den Stator zu führen, können die statorseitigen Abschnitte der magnetischen Kreise jeweils mit mindestens einer magnetischen Flusssperre versehen sein, die einen größeren spezifischen magnetischen Widerstand als das übrige Material des jeweiligen statorseitigen Abschnitts aufweist. Derartige Flusssperren modifizieren den Feldlinienverlauf, da die Feldlinien die Flusssperren nicht oder nur schlecht passieren können und folglich (zumindest überwiegend) um die Flusssperren herum verlaufen müssen.

Darüber hinaus wird es als vorteilhaft angesehen, wenn der oder die statorseitigen Magnete im flussführenden statorseitigen Material eingebettet sind.

Für die Umwandlung der propellerdrehzahlabhängigen Generatorausgangsspannung und Ausgangsfrequenz werden vorzugsweise Umrichter verwendet.

Auch kann eine Schrägung der Rotorstruktur in eine Richtung oder - beispielsweise je zur Hälfte - in beide Richtungen (Pfeilschrägung) vorgesehen werden, um unter anderem Rastmomente zu reduzieren und die Schallerzeugung positiv zu beeinflussen.

Die Erfindung wird nachfolgend anhand von Ausführungsbeispielen näher erläutert; dabei zeigen beispielhaft
- Figur 1: ein Ausführungsbeispiel für eine Anordnung mit einer erfindungsgemäßen Windenergieanlage, die an ein Energieübertragungsnetz angeschlossen ist,
- Figuren 2 bis 19: unterschiedliche Ausführungsbeispiele für Statormodule für einen Generator für die Windenergieanlage gemäß Figur 1,
- Figur 20: ein Ausführungsbeispiel für schräg verlaufende Zähne eines Rotors für die Windenergieanlage gemäß Figur 1 und
- Figur 21: ein weiteres Ausführungsbeispiel für schräg verlaufende Zähne eines Rotors für die Windenergieanlage gemäß Figur 1.

In den Figuren werden der Übersicht halber für identische oder vergleichbare Komponenten stets dieselben Bezugszeichen verwendet.

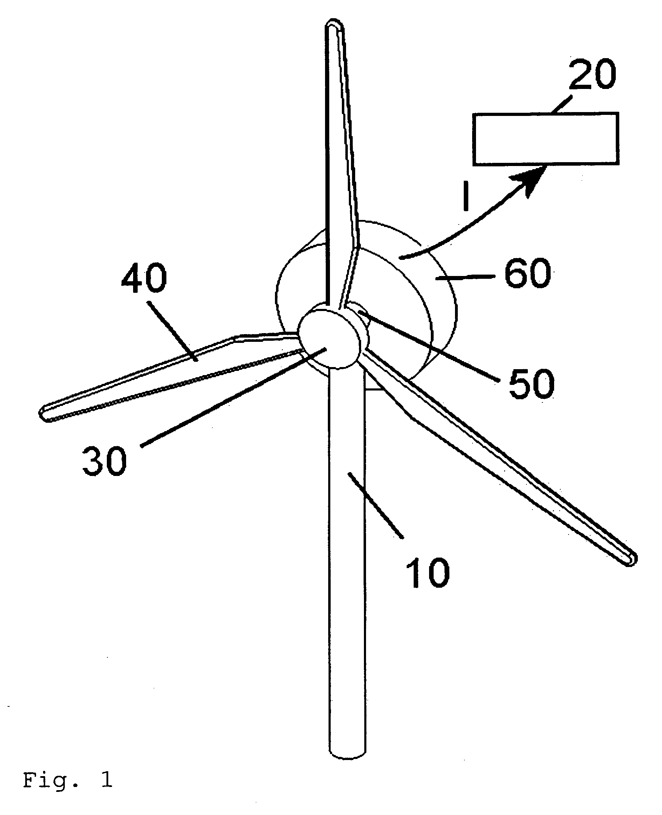

In der Figur 1 erkennt man eine Anordnung mit einer Windenergieanlage 10, die an ein Energieübertragungsnetz 20 angeschlossen ist. Die Windenergieanlage 10 wandelt Windenergie in elektrische Energie um und speist diese in das Energieübertragungsnetz 20 ein.

Die Windenergieanlage 10 umfasst einen Propeller 30, der mehrere Flügel 40 umfassen kann. Bei dem Ausführungsbeispiel gemäß der Figur 1 weist der Propeller 30 drei Flügel auf, selbstverständlich kann der Propeller 30 auch weniger oder mehr Flügel aufweisen.

Der Propeller 30 dreht sich um eine Achse 50, die mit einem Generator 60 der Windenergieanlage 10 in Verbindung steht. Wird durch Windeinwirkung der Propeller 30 in eine Rotationsbewegung um die Achse 50 versetzt, so wird der Generator 60 elektrischen Strom I erzeugen, der in das Energieübertragungsnetz 20 eingespeist wird.

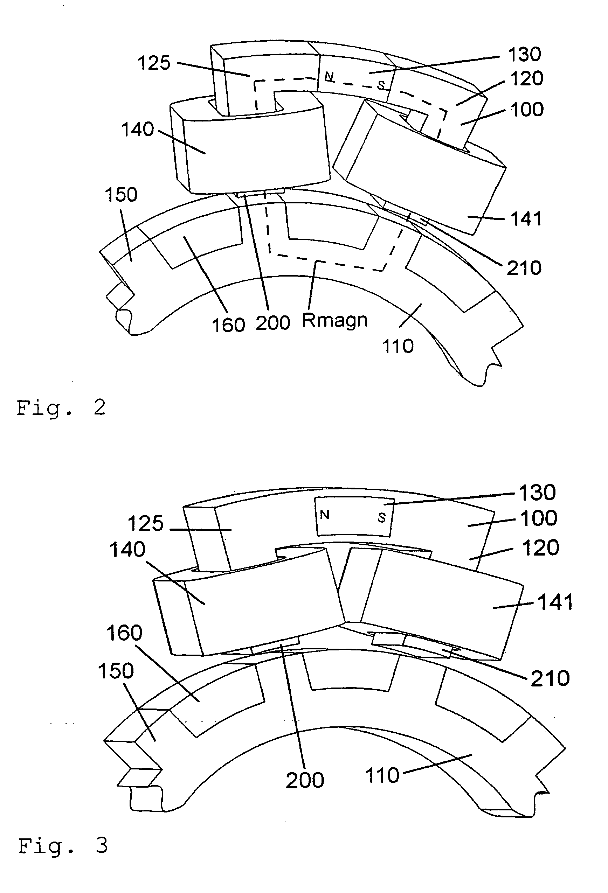

Die Figur 2 zeigt beispielhaft eine mögliche Ausführungsform für den Generator 60 in einer Teildarstellung. So erkennt man in der Figur 2 ein Statormodul 100, das gemeinsam mit anderen nicht weiter dargestellten Statormodulen einen Stator des Generators 60 bildet. Außerdem ist ein Abschnitt 110 eines nicht weiter dargestellten Rotors des Generators 60 dargestellt.

In der Figur 2 mit dem Bezugszeichen 120 gekennzeichnet ist ein magnetischer Kreis, der statorseitig ein flussführendes Element 125 des Statormoduls 100, einen moduleigenen Magneten 130 des Statormoduls 100 sowie zwei moduleigene Spulen 140 und 141 des Statormoduls 100 erfasst. Die moduleigenen Spulen 140 und 141 werden zumindest von einem Teil des magnetischen Flusses durchflossen, der von dem moduleigenen Magneten 130 erzeugt wird. Das flussführende Element 125 des Statormoduls 100 kann auch als magnetisches Joch des Statormoduls 100 bezeichnet werden.

Der magnetische Kreis 120 erfasst darüber hinaus einen Abschnitt des Rotors 110. Der Abschnitt des Rotors 110 bildet einen magnetischen Widerstand Rm, der von dem jeweiligen Rotationswinkel des Rotors relativ zum Stator abhängt. So lässt sich in der Figur 2 erkennen, dass der Rotor 110 Zähne 150 aufweist, die einen geringen magnetischen Widerstand bilden. Die Zähne 150 sind voneinander durch Spalte 160 getrennt, die einen gegenüber den Zähnen 150 größeren magnetischen Widerstand bilden. Wird nun der Rotor 110 gegenüber dem Statormodul 100 verdreht, so wird sich für den magnetischen Kreis 120 der gesamte magnetische Widerstand periodisch ändern und stets davon abhängen, welchen Drehwinkel der Rotor relativ zum Stator jeweils aufweist.

Geht man beispielhaft davon aus, dass der moduleigene Magnet 130 eine konstante magnetische Feldstärke erzeugt, so wird der magnetische Fluss, der durch den magnetischen Kreis 120 fließt, also von der jeweiligen Stellung des Rotors abhängen. Ist der Rotor 110 so ausgerichtet, wie dies in der Figur 2 dargestellt ist, so wird der magnetische Fluss im magnetischen Kreis 120 maximal sein. Wird der Rotor demgegenüber verdreht, so wird der magnetische Fluss geringer werden. Aufgrund der Flussänderung in den beiden moduleigenen Spulen 140 und 141 wird es zu einer induzierten Spannung an den Leiterenden der beiden Spulen kommen, die als elektrische Energie an das Energieübertragungsnetz 20 gemäß Figur 1 abgegeben werden kann.

Wie sich der Figur 2 darüber hinaus entnehmen lässt, ist das flussführende Element 125 des Statormoduls 100 im Querschnitt U-förmig ausgestaltet und weist zwei Schenkelenden 200 und 210 auf, die mit den Zähnen 150 bzw. den Spalten 160 im Rotor 110 zusammenwirken. Die im Querschnitt U-förmige Ausgestaltung des flussführenden Elements 125 ist hier nur beispielhaft zu verstehen; selbstverständlich kann das flussführende Element 125 auch andere Formgestaltungen aufweisen, wie weiter unten im Zusammenhang mit anderen Ausführungsbeispielen noch näher erläutert werden wird.

Um eine glatte Oberfläche des Rotors zu erreichen, können die Spalte 160 mit einem Material gefüllt werden, das einen anderen magnetischen Widerstand als die Zähne 150 aufweist. Beispielsweise können die Spalte 160 mit Kunststoff oder einem Harz gefüllt werden.

Als besonders vorteilhaft wird es jedoch angesehen, wenn die Spalte 160 lediglich mit Luft befüllt sind, so dass im Falle einer Rotation des Rotors eine Luftverwirbelung im Spalt zwischen Rotor und Stator auftritt und sowohl Rotor als auch Stator durch den Luftzug gekühlt werden.

Bei dem moduleigenen Magneten 130 kann es sich um einen Permanentmagneten oder um einen Elektromagneten handeln.

Die Figur 3 zeigt ein anderes Ausführungsbeispiel für eine mögliche Ausgestaltung des Statormoduls 100. Bei dem Ausführungsbeispiel gemäß Figur 3 ist der moduleigene Magnet 130 des Statormoduls 100 im Material des flussführenden Elements 125 eingebettet. Im Übrigen entspricht das Ausführungsbeispiel gemäß Figur 3 dem Ausführungsbeispiel gemäß Figur 2.

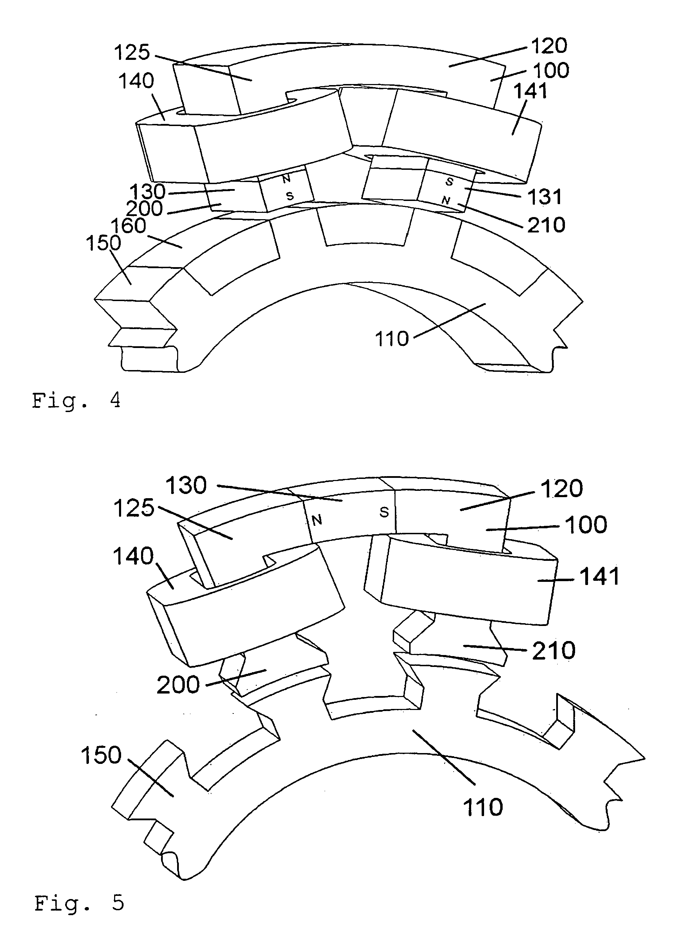

Die Figur 4 zeigt beispielhaft ein Ausführungsbeispiel für ein Statormodul 100, bei dem zwei moduleigene Magneten 130 und 131 vorhanden sind. Die beiden moduleigenen Magnete befinden sich an den Schenkelenden 200 und 210 des U-förmig geformten flussführenden Elements 125. Im Übrigen entspricht das Ausführungsbeispiel gemäß der Figur 4 dem Ausführungsbeispiel gemäß den Figuren 2 und 3.

In der Figur 5 ist ein Ausführungsbeispiel für ein Statormodul 100 gezeigt, bei dem das flussführende moduleigene Element 125 im Bereich der moduleigenen Spulen 140 und 141 eine kleinere Querschnittsfläche aufweist als im Bereich der Schenkelenden 200 und 210. Vorzugsweise ist die Formgestaltung der Zähne 150 im Rotor an die Formgestaltung und den Querschnitt der Schenkelenden 200 und 210 angepasst; beispielsweise sind die Querschnitte der Schenkelenden und die Querschnitte der Zähne 150 identisch.

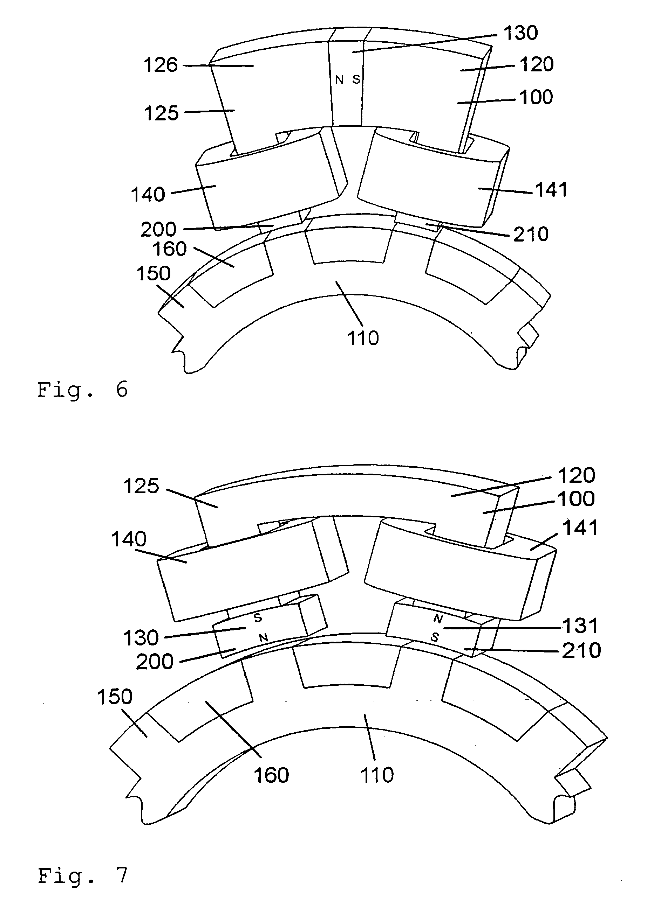

In der Figur 6 ist ein Ausführungsbeispiel für ein Statormodul 100 des Generators 60 gezeigt, bei dem ebenfalls eine Flusskonzentration im Bereich der moduleigenen Spulen 140 und 141 vorgenommen ist. So lässt sich erkennen, dass das flussführende statorseitige Element 125 im Bereich der moduleigenen Spulen 140 und 141 einen geringeren Querschnitt aufweist als im Bogenbereich 126 des flussführenden Elements 125.

Die Figur 7 zeigt beispielhaft ein Ausführungsbeispiel für ein Statormodul 100, das eine Art Kombination der Ausführungsbeispiele gemäß den Figuren 4 und 5 darstellt. So erkennt man in der Figur 7 zwei moduleigene Magnete 130 und 131, die an den Schenkelenden 200 und 210 des flussführenden statorseitigen Elements 125 angeordnet sind. Außerdem ist ersichtlich, dass der Querschnitt der Schenkelenden 200 und 210 bzw. der Querschnitt der moduleigenen Magnete 130 und 131 größer ist als der Querschnitt des flussführenden statorseitigen Elements 125 im Bereich der beiden moduleigenen Spulen 140 und 141.

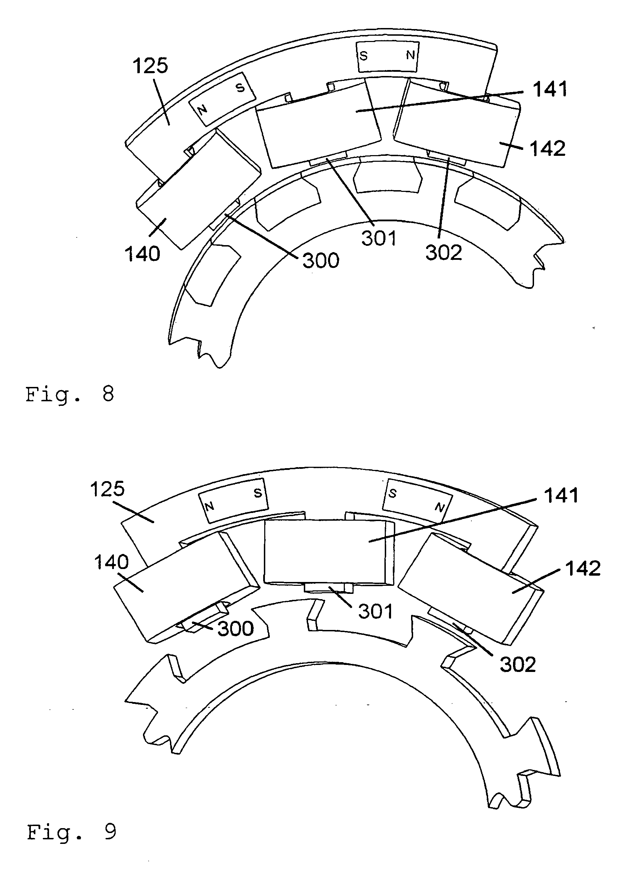

In der Figur 8 ist ein Ausführungsbeispiel für ein Statormodul 100 gezeigt, bei dem das flussführende Element 125 des Statormoduls 100 kammartig bzw. kammförmig ausgestaltet ist. Vorzugsweise handelt es sich bei dem flussführenden Element 125 um einen bogenförmigen Kamm mit radial nach innen ausgeformten Schenkeln, von denen in der Figur 8 beispielhaft drei mit den Bezugszeichen 300, 301 und 302 gekennzeichnet sind.

Die Polteilung des Statormoduls 100 und die Polteilung des Rotors sind bei dem Ausführungsbeispiel gemäß Figur 8 identisch, so dass die in den moduleigenen Spulen 140, 141, 142 induzierten Spannungen entweder die gleiche Phase oder einen Phasenversatz von 180° aufweisen. Durch ein entsprechendes Verschalten der moduleigenen Spulen kann somit Strom und Spannung für ein einphasiges Energieübertragungssystem erzeugt werden.

Bei dem Ausführungsbeispiel gemäß Figur 9 ist das flussführende statorseitige Element 125 des Statormoduls 100 ebenfalls durch ein bogenförmiges Element mit einer kammartigen Struktur gebildet, wie dies bereits im Zusammenhang mit der Figur 8 erläutert worden ist. Im Unterschied zu dem Ausführungsbeispiel gemäß Figur 8 ist jedoch die Polteilung zwischen Stator und Rotor nicht identisch, so dass die in den moduleigenen Spulen 140, 141 und 142 induzierten Spannungen eine Phasenversatz zueinander aufweisen, der von dem Polversatz zwischen Stator und Rotor abhängt. Durch einen solchen Versatz lassen sich mehrphasige, beispielsweise dreiphasige, Ströme und Spannungen für ein mehrphasiges, insbesondere dreiphasiges, Energieübertragungssystem generieren.

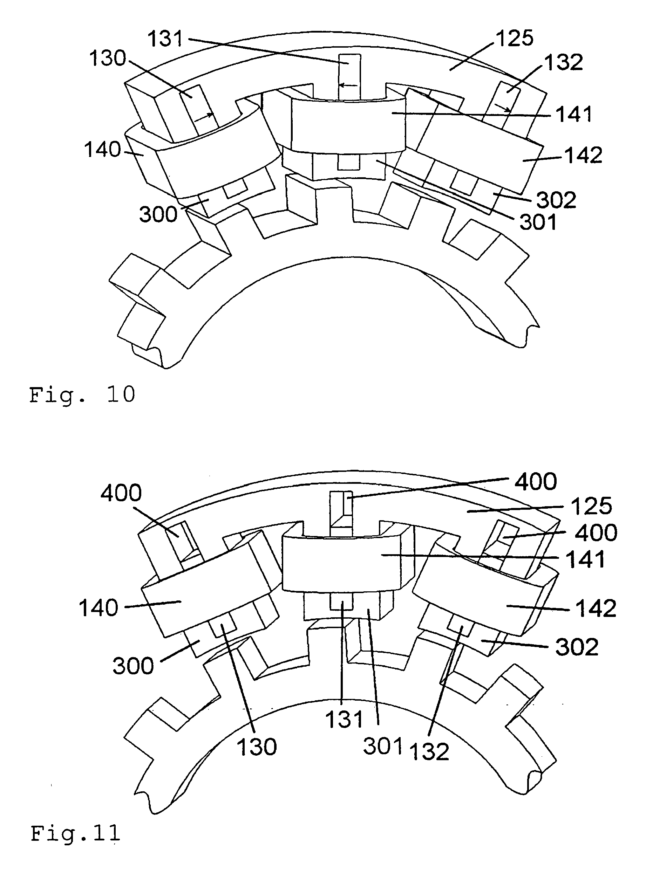

In der Figur 10 ist ein Ausführungsbeispiel für ein Statormodul 100 gezeigt, bei dem die moduleigenen Magnete 130, 131 und 132 entlang der Längsrichtung der Schenkel 300, 301 und 302 des flussführenden statorseitigen Elements 125 des Statormoduls 100 ausgerichtet sind. Bei dieser Ausgestaltung kommt es bei einer Relativdrehung des Rotors relativ zum Stator zu einem Wechsel der Feldlinienrichtung innerhalb der Schenkel und somit zu einem Phasenwechsel der in den moduleigenen Spulen 140, 141 und 142 induzierten elektrischen Spannungen.

Die Figur 11 zeigt ein Ausführungsbeispiel für ein Statormodul 100, bei dem in den Schenkeln 300, 301 und 302 des flussführenden statorseitigen Elements 125 Flusssperren 400 integriert sind, die einen besonders hohen magnetischen Widerstand aufweisen. Die Funktion der Flusssperren 400 besteht darin, die magnetischen Feldlinien innerhalb des flussführenden statorseitigen Elements 125 in geeigneter Weise derart zu führen, dass ein möglichst großer Effizienzgrad erreicht wird.

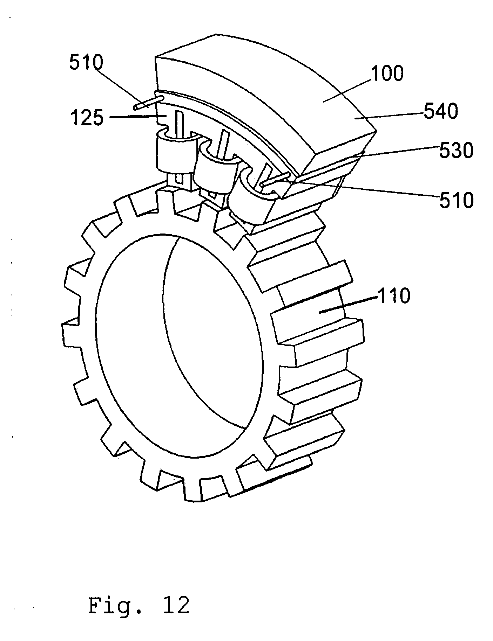

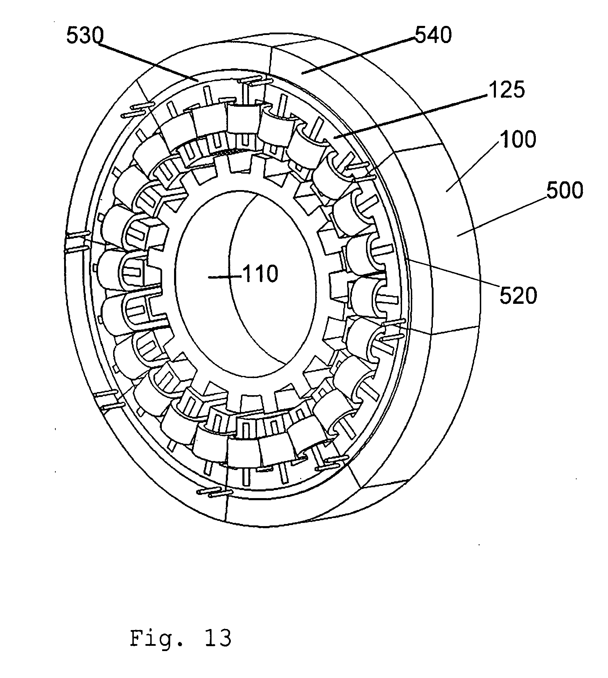

In den Figuren 12 und 13 ist anhand eines Ausführungsbeispiels gezeigt, wie die Statormodule 100 zu einem kompletten Stator 500 zusammengesetzt werden können. Man erkennt, dass jedes Statormodul 100 jeweils zwei Befestigungsstifte 510 aufweist, mit denen die Statormodule jeweils mit benachbarten Statormodulen, beispielsweise durch Klammern, verbunden werden können. Auch ist es möglich, auf die Befestigungsstifte 510 einen in der Figur 13 angedeuteten und mit dem Bezugszeichen 520 gekennzeichneten Befestigungsring aufzusetzen, dessen Ringdurchmesser mit dem Durchmesser des Stators 500 korrespondiert.

In den Figuren 12 und 13 erkennt man außerdem, dass die Statormodule 100 jeweils zwei äußere Ringsegmente 530 und 540 aufweisen können, die außen auf dem flussführendes Element bzw. magnetischen Joch 125 des Statormoduls 100 aufgesetzt sind. In dem ersten äußeren Ringsegment 530 kann beispielsweise eine moduleigene Kühleinrichtung integriert sein, die mittelbar oder unmittelbar auf der dem Rotor abgewandten Jochaußenseite des magnetischen Jochs 125 angeordnet ist.

In dem auf dem ersten äußeren Ringsegment 530 aufgesetzten zweiten äußeren Ringsegment 540 kann beispielsweise ein Umoder Gleichrichter integriert sein, der eine von der oder von den moduleigenen Spulen gelieferte Wechselspannung um- bzw. gleichrichtet und als moduleigene Ausgangsspannung eine moduleigene Wechsel- bzw. Gleichspannung erzeugt. Die Um- oder Gleichrichter sind bei dem Ausführungsbeispiel gemäß der Figur 13 jeweils auf einer dem Rotor 110 und dem magnetischen Joch 125 abgewandten Außenseite des ersten Ringsegments 530 und damit auf der der Jochaußenseite abgewandten Außenseite der moduleigenen Kühleinrichtung angeordnet. Die Kühleinrichtung kühlt somit in vorteilhafter Weise sowohl das innen liegende magnetische Joch 125 als auch den außen liegenden Um-oder Gleichrichter.

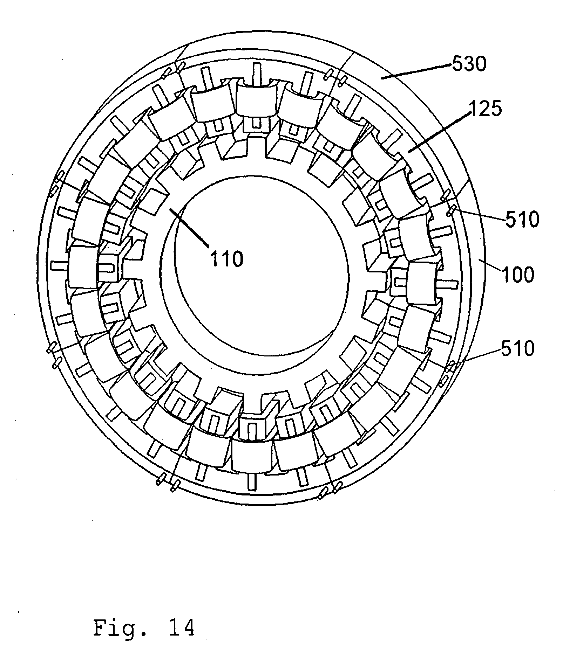

Die Figur 14 zeigt beispielhaft Statormodule 100, die jeweils mit zwei Befestigungsstiften 510 ausgestattet sind und jeweils ein äußeres Ringsegment 530 mit integrierter moduleigener Kühleinrichtung aufweisen. Die Kühleinrichtung ist jeweils auf der Jochaußenseite des Joches 125 angebracht. Ein zweites äußeres Ringsegment mit Um- oder Gleichrichter fehlt jedoch bei diesem Ausführungsbeispiel.

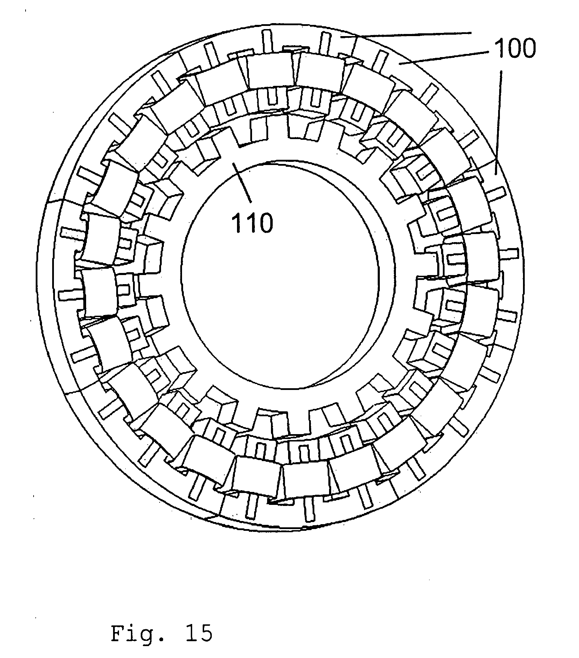

Die Figur 15 zeigt beispielhaft Statormodule 100, die untereinander mit nicht weiter dargestellten Klammern verbunden sind. Äußere Ringsegmente für Kühleinrichtungen und/oder Um-oder Gleichrichter fehlen bei diesem Ausführungsbeispiel.

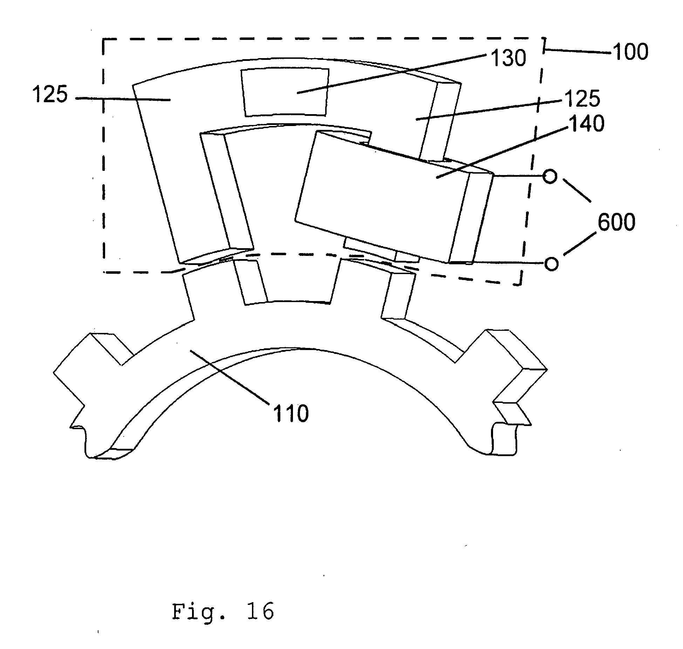

Die Figur 16 zeigt beispielhaft eine mögliche Ausführungsform für ein Statormodul 100 mit einem moduleigenen Magneten 130 und einer moduleigenen Spule 140. Die Spule 140 weist äußere elektrische Anschlüsse 600 auf, mit denen das Statormodul 100 mit anderen Statormodulen elektrisch verschaltet werden kann.

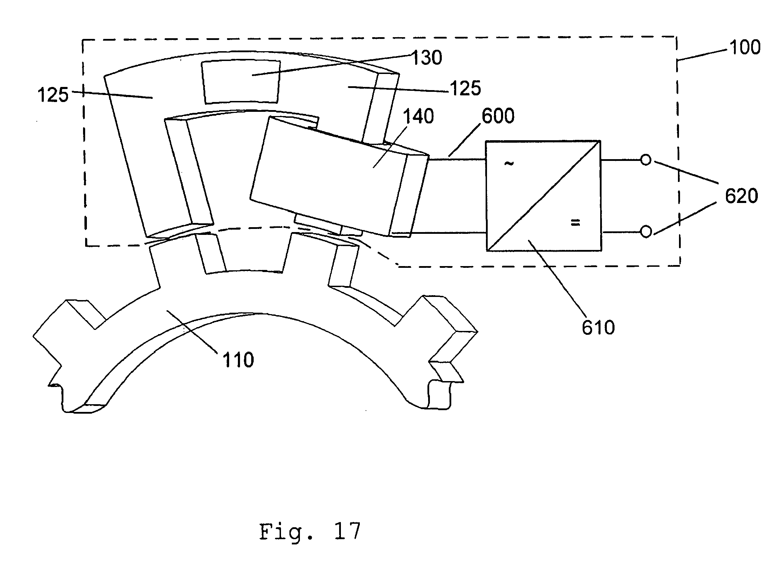

Die Figur 17 zeigt beispielhaft eine mögliche Ausführungsform für ein Statormodul 100, bei dem an die elektrischen Anschlüsse 600 der moduleigenen Spule 140 ein moduleigener Gleichrichter 610 angeschlossen ist. Äußere Anschlüsse 620 des Gleichrichters 610 dienen dazu, das Statormodul 100 mit anderen Statormodulen elektrisch zu verschalten.

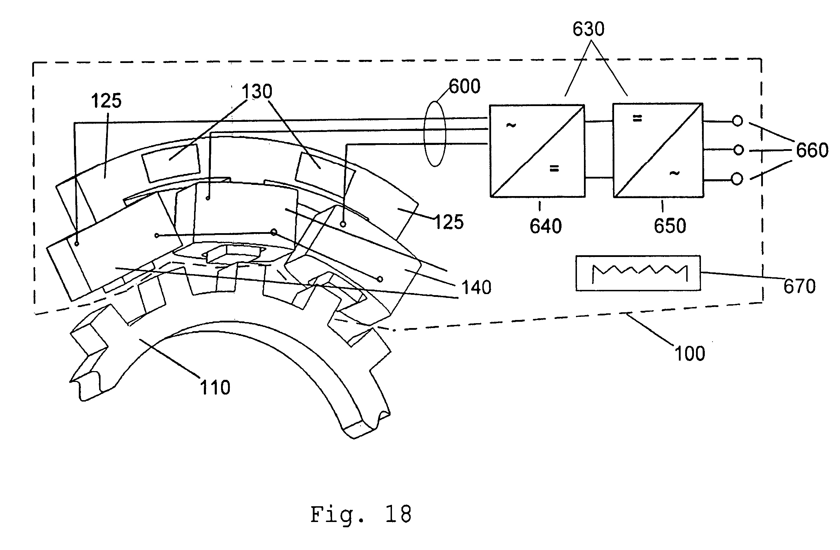

Die Figur 18 zeigt beispielhaft eine mögliche Ausführungsform für ein Statormodul 100, bei dem an die elektrischen Anschlüsse 600 der drei moduleigenen Spulen 140 ein moduleigener Umrichter 630 angeschlossen ist. Der Umrichter 630 wird durch einen moduleigenen Gleichrichter 640 und einen nachgeschalteten moduleigenen Wechselrichter 650 gebildet. Äußere Anschlüsse 660 des Umrichters 630 dienen dazu, das Statormodul 100 mit anderen Statormodulen elektrisch zu verschalten. Das Statormodul 100 weist außerdem eine Kühleinrichtung auf, die mit dem Bezugszeichen 670 gekennzeichnet ist.

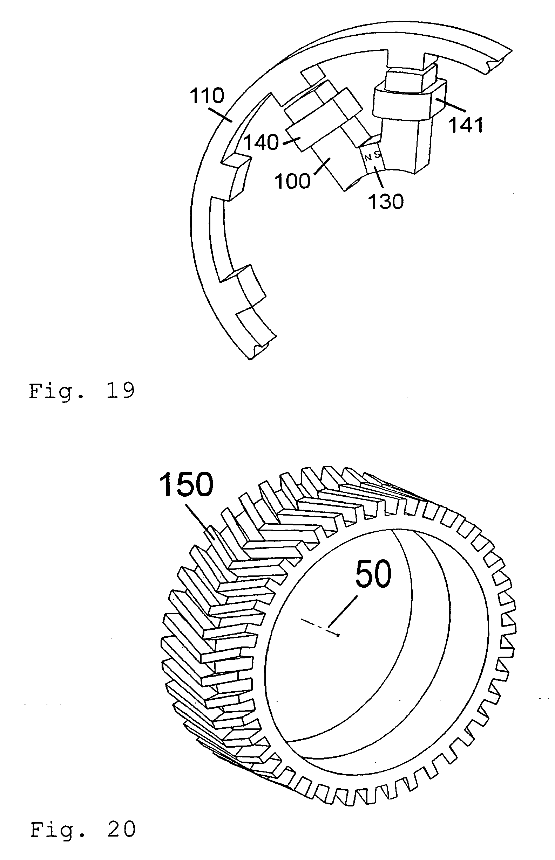

In der Figur 19 ist beispielhaft die Möglichkeit dargestellt, einen Generator 60 nach Figur 1 so zu gestalten, dass sich der Rotor 110 außen um die Statormodule 100 herum bewegen kann. Alle Ausführungsvarianten nach den Figuren 2 bis 18 lassen sich auch als Außenläufer ausführen.

In der Figur 20 ist beispielhaft dargestellt, dass die Zähne 150 nicht unbedingt parallel zur Rotationsachse 50 gemäß Figur 1 verlaufen müssen. So ist ersichtlich, dass bei dem Ausführungsbeispiel gemäß Figur 20 ein schräger Verlauf der Zähne 150 des Rotors vorgesehen ist; denn die Zähne 150 verlaufen schräg bzw. winklig zur Rotationsachse 50 des Rotors.

In entsprechender Weise können auch die Schenkel des oder der flussführenden statorseitigen Elemente 125 der Statormodule 100 schräg bzw. winklig zur Rotationsachse 50 des Generators ausgerichtet sein.

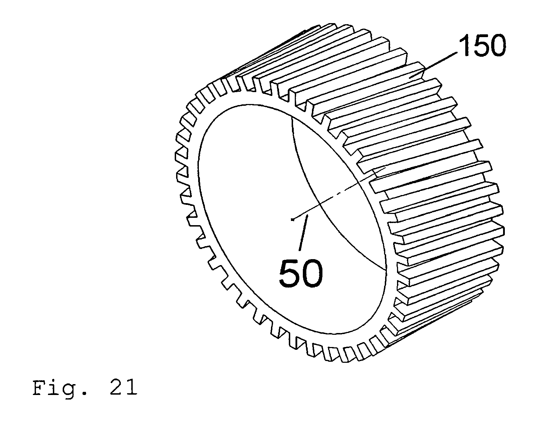

Die Figur 21 zeigt beispielhaft eine Formgestaltung der Zähne mit Schrägung, bei der die Zähne eine Pfeilschräge aufweisen. So ist jeweils ein Abschnitt eines jeden Zahns von der Rotationsachse wegorientiert, wohingegen ein sich daran anschließender weiterer Abschnitt des jeweiligen Zahns wieder zur Rotationsachse hinorientiert ist, so dass - entlang der Rotationssachse gesehen - eine insgesamt pfeilförmige Struktur pro Zahn gebildet wird.

### Bezugszeichenliste

- 10: Windenergieanlage
- 20: Energieübertragungsnetz
- 30: Propeller
- 40: Flügel
- 50: Achse
- 60: Generator
- 100: Statormodul
- 110: Rotor
- 120: magnetischer Kreis
- 125: flussführendes moduleigenes Element
- 126: Bogen- bzw. Bodenbereich
- 130: Magnet
- 131: Magnet
- 132: Magnet
- 140: statorseitige Spule
- 141: statorseitige Spule
- 142: statorseitige Spule
- 150: Zähne
- 160: Spalte
- 200: Schenkelenden
- 210: Schenkelenden
- 300: Schenkel
- 301: Schenkel
- 302: Schenkel
- 400: Flusssperre
- 500: Stator
- 510: Befestigungsstift
- 520: Befestigungsring
- 530: erstes Ringsegment
- 540: zweites Ringsegment
- 600: elektrischer Anschluss
- 610: moduleigener Gleichrichter
- 620: äußerer Anschluss
- 630: moduleigener Umrichter
- 640: moduleigener Gleichrichter
- 650: moduleigener Wechselrichter
- 660: äußerer Anschluss
- 670: Kühleinrichtung

- I: Strom
- Rm: Widerstand

## Patentansprüche

1. Wind- oder Wasserenergieanlage (10) zum Erzeugen elektrischer Energie mit mindestens einem Propeller (30) und mindestens einem Generator (60), der einen Rotor (110) und einen Stator (500) umfasst,
- wobei der Stator durch mindestens zwei mechanisch und elektrisch voneinander unabhängige Statormodule (100) gebildet ist, die jeweils mit dem Rotor zusammenwirken, und
- wobei im Falle einer Relativbewegung zwischen Rotor und Stator jedes Statormodul eine moduleigene Ausgangsspannung erzeugt,
**dadurch gekennzeichnet, dass**
- jedes der Statormodule jeweils mindestens einen moduleigenen Magneten (130), ein magnetisches Joch (125) und mindestens eine Spule (140), die von zumindest einem Teil des magnetischen Flusses des Magneten durchflossen wird, umfasst und jedes der Statormodule mit dem Rotor jeweils einen moduleigenen Magnetkreis (120) bildet,
- mindestens eines der Statormodule, vorzugsweise alle Statormodule, eine moduleigene Kühleinrichtung (670) und einen Um- oder Gleichrichter (610, 630, 640, 650) aufweist, der eine von der oder von den moduleigenen Spulen gelieferte Wechselspannung um- bzw. gleichrichtet und als moduleigene Ausgangsspannung eine moduleigene Wechsel- bzw. Gleichspannung erzeugt,
- die moduleigene Kühleinrichtung mittelbar oder unmittelbar auf der dem Rotor abgewandten Jochaußenseite des magnetischen Jochs angeordnet ist, und
- der Um- oder Gleichrichter auf einer dem Rotor und der Jochaußenseite abgewandten Außenseite der moduleigenen Kühleinrichtung (670) angeordnet ist.

2. Wind- oder Wasserenergieanlage nach Anspruch 1,
**dadurch gekennzeichnet, dass**
- das Statormodul (100) jeweils zwei äußere Ringsegmente (530 und 540) aufweist, die außen auf dem magnetischen Joch (125) aufgesetzt sind, und zwar derart, dass auf dem ersten äußeren Ringsegment (530) das zweite äußere Ringsegment (540) aufgesetzt ist,
- wobei in dem ersten äußeren Ringsegment (530) die moduleigene Kühleinrichtung integriert ist und
- wobei in dem auf dem ersten äußeren Ringsegment (530) aufgesetzten zweiten äußeren Ringsegment (540) der Um- oder Gleichrichter integriert ist.

3. Wind- oder Wasserenergieanlage nach Anspruch 1 oder 2,
**dadurch gekennzeichnet, dass**
die Statormodule jeweils unabhängig von anderen Statormodulen aus dem Generator ausgebaut und in diesen eingebaut werden können sowie unabhängig von anderen Statormodulen ausgetauscht werden können.

4. Wind- oder Wasserenergieanlage nach einem der voranstehenden Ansprüche,
**dadurch gekennzeichnet, dass**
die Statormodule jeweils eine Montageeinrichtung aufweisen, mit der sich der Abstand zwischen dem jeweiligen Statormodul und dem Rotor modulindividuell einstellen lässt.

5. Wind- oder Wasserenergieanlage nach einem der voranstehenden Ansprüche,
**dadurch gekennzeichnet, dass**
die Statormodule des Stators baugleich sind.

6. Wind- oder Wasserenergieanlage nach einem der voranstehenden Ansprüche,
**dadurch gekennzeichnet, dass**
der Rotor auf seiner den Statormodulen zugewandten Oberfläche einen von seinem jeweiligen Rotationswinkel abhängigen magnetischen Widerstand (Rm) aufweist, so dass die Größe des magnetischen Flusses in den Spulen der Statormodule von dem jeweiligen Rotationswinkel des Rotors abhängig ist und sich bei Rotation des Rotors ändert.

7. Wind- oder Wasserenergieanlage nach einem der voranstehenden Ansprüche,
**dadurch gekennzeichnet, dass**
die Magnete der Statormodule Permanentmagneten sind.

8. Wind- oder Wasserenergieanlage nach einem der voranstehenden Ansprüche,
**dadurch gekennzeichnet, dass**
die Anordnung der Statormodule um die Drehachse des Rotors drehsymmetrisch ist.

9. Wind- oder Wasserenergieanlage nach einem der voranstehenden Ansprüche,
**dadurch gekennzeichnet, dass**
der Rotor auf seiner den Statormodulen zugewandten Oberfläche sich radial in Richtung der Statormodule erstreckende Zähne (150) aufweist.

10. Wind- oder Wasserenergieanlage nach einem der voranstehenden Ansprüche,
**dadurch gekennzeichnet, dass**
der Zwischenraum zwischen benachbarten Zähnen ganz oder teilweise mit einem Material gefüllt ist, das einen größeren magnetischen Widerstand als das Material der Zähne aufweist.

11. Wind- oder Wasserenergieanlage nach einem der voranstehenden Ansprüche,
**dadurch gekennzeichnet, dass**
der Rotor außen um den Stator herum oder innerhalb des Stators angeordnet ist.

12. Wind- oder Wasserenergieanlage nach einem der voranstehenden Ansprüche,
**dadurch gekennzeichnet, dass**
der Propeller mit dem Rotor des Generators drehfest verbunden ist.

## Claims

1. Wind or water energy installation (10) for production of electrical energy having at least one propeller (30) and at least one generator (60), which comprises a rotor (110) and a stator (500),
- with the stator being formed by at least two stator modules (100) which are mechanically and electrically independent of one another and each interact with the rotor, and
- with each stator module producing a module-specific output voltage in the event of a relative movement between the rotor and the stator,
**characterized in that**
- each of the stator modules in each case comprises at least one module-specific magnet (130), a magnetic yoke (125) and at least one coil (140) through which at least a portion of the magnetic flux of the magnet flows, and each of the stator modules in each case forms a module-specific magnetic circuit (120) with the rotor,
- at least one of the stator modules, preferably all of the stator modules, has or have a module-specific cooling device (670) and a converter or rectifier (610, 630, 640, 650), which converts or rectifies an AC voltage produced by the module-specific coil or coils, and produces a module-specific AC voltage or DC voltage as the module-specific output voltage,
- the module-specific cooling device is arranged indirectly or directly on that yoke outer face of the magnetic yoke which is averted from the rotor, and
- the converter or rectifier is arranged on an outer face of the module-specific cooling device (670) which is averted from the rotor and the yoke outer face.

2. Wind or water energy installation according to Claim 1,
**characterized in that**
- the stator module (100) has in each case two outer ring segments (530 and 540) placed on the exterior on the magnetic yoke (125), namely in such a way that the second outer ring segment (540) is placed on the first outer ring segment (530),
- wherein the module-specific cooling device is integrated in the first outer ring segment (530), and
- wherein the converter or rectifier is integrated in the second outer ring segment (540) placed on the first outer ring segment (530).

3. Wind or water energy installation according to Claim 1 or 2,
**characterized in that**
the stator modules can each be removed from the generator, and fitted into it, independently of other stator modules, and can be replaced independently of other stator modules.

4. Wind or water energy installation according to one of the preceding claims,
**characterized in that**
the stator modules each have a mounting device by means of which the distance between the respective stator module and the rotor can be adjusted on a module-specific basis.

5. Wind or water energy installation according to one of the preceding claims,
**characterized in that**
the stator modules of the stator are physically identical.

6. Wind or water energy installation according to one of the preceding claims,
**characterized in that**,
on its surface facing the stator modules, the rotor has a magnetic reluctance (Rm), which is dependent on its respective rotation angle, such that the magnitude of the magnetic flux in the coils of the stator modules is dependent on the respective rotation angle of the rotor, and varies during rotation of the rotor.

7. Wind or water energy installation according to one of the preceding claims,
**characterized in that**
the magnets of the stator modules are permanent magnets.

8. Wind or water energy installation according to one of the preceding claims,
**characterized in that**
the arrangement of the stator modules around the rotation axis of the rotor is rotationally symmetrical.

9. Wind or water energy installation according to one of the preceding claims,
**characterized in that**,
on its surface facing the stator modules, the rotor has teeth (150) which extend radially in the direction of the stator modules.

10. Wind or water energy installation according to one of the preceding claims,
**characterized in that**
the intermediate space between adjacent teeth is entirely or partially filled with a material which has a higher magnetic reluctance than the material of the teeth.

11. Wind or water energy installation according to one of the preceding claims,
**characterized in that**
the rotor is arranged externally around the stator or within the stator.

12. Wind or water energy installation according to one of the preceding claims,
**characterized in that**
the propeller is connected to the rotor of the generator such that they rotate together.

## Revendications

1. Installation d'énergie éolienne ou hydraulique (10) pour générer de l'énergie électrique, comprenant au moins une hélice (30) et au moins un générateur (60), qui comprend un rotor (110) et un stator (500),
- le stator étant formé par au moins deux modules de stator (100) indépendants l'un de l'autre mécaniquement et électriquement qui coopèrent chacun avec le rotor, et
- dans le cas d'un mouvement relatif entre le rotor et le stator, chaque module de stator générant une tension de sortie propre au module,
**caractérisée en ce que**
- chacun des modules de stator comprend à chaque fois au moins un aimant (130) propre au module, une culasse magnétique (125) et au moins une bobine (140) qui est parcourue par au moins une partie du flux magnétique de l'aimant, et chacun des modules de stator forme avec le rotor à chaque fois un circuit magnétique (120) propre au module,
- au moins l'un des modules de stator, de préférence tous les modules de stator, présentent un dispositif de refroidissement (670) propre au module et un convertisseur ou un redresseur (610, 630, 640, 650), qui convertit ou redresse une tension alternative fournie par la ou les bobines propres au module et qui génère en tant que tension de sortie propre au module une tension alternative ou continue propre au module,
- le dispositif de refroidissement propre au module est disposé de manière directe ou indirecte sur le côté extérieur de la culasse magnétique opposé au rotor, et
- le convertisseur ou le redresseur est disposé sur un côté extérieur du dispositif de refroidissement (670) propre au module opposé au rotor et au côté extérieur de la culasse.

2. Installation d'énergie éolienne ou hydraulique selon la revendication 1,
**caractérisée en ce que**
- le module de stator (100) présente à chaque fois deux segments annulaires extérieurs (530 et 540) qui sont placés à l'extérieur sur la culasse magnétique (125), et ce de telle sorte que sur le premier segment annulaire extérieur (530) soit placé le deuxième segment annulaire extérieur (540),
- le dispositif de refroidissement propre au module étant intégré dans le premier segment annulaire extérieur (530) et
- le convertisseur ou le redresseur étant intégré dans le deuxième segment annulaire extérieur (540) placé sur le premier segment annulaire extérieur (530).

3. Installation d'énergie éolienne ou hydraulique selon la revendication 1 ou 2,
**caractérisée en ce que**
les modules de stator peuvent à chaque fois être démontés du générateur indépendamment d'autres modules de stator et être installés dans celui-ci,
et peuvent aussi être remplacés indépendamment d'autres modules de stator.

4. Installation d'énergie éolienne ou hydraulique selon l'une quelconque des revendications précédentes,
**caractérisée en ce que**
les modules de stator présentent à chaque fois un dispositif de montage avec lequel la distance entre le module de stator respectif et le rotor peut être ajustée de manière individuelle au module.

5. Installation d'énergie éolienne ou hydraulique selon l'une quelconque des revendications précédentes,
**caractérisée en ce que**
les modules de stator du stator sont de même construction.

6. Installation d'énergie éolienne ou hydraulique selon l'une quelconque des revendications précédentes,
**caractérisée en ce que**
le rotor présente, sur sa surface tournée vers les modules de stator, une résistance magnétique (Rm) dépendant de son angle de rotation respectif, de sorte que l'ampleur du flux magnétique dans les bobines des modules de stator dépende de l'angle de rotation respectif du rotor et varie lors de la rotation du rotor.

7. Installation d'énergie éolienne ou hydraulique selon l'une quelconque des revendications précédentes,
**caractérisée en ce que**
les aimants des modules de stator sont des aimants permanents.

8. Installation d'énergie éolienne ou hydraulique selon l'une quelconque des revendications précédentes,
**caractérisée en ce que**
l'agencement des modules de stator autour de l'axe de rotation du rotor est suivant une symétrie de révolution.

9. Installation d'énergie éolienne ou hydraulique selon l'une quelconque des revendications précédentes,
**caractérisée en ce que**
le rotor présente, sur sa surface tournée vers les modules de stator, des dents (150) s'étendant radialement dans la direction des modules de stator.

10. Installation d'énergie éolienne ou hydraulique selon l'une quelconque des revendications précédentes,
**caractérisée en ce que**
l'espace intermédiaire entre des dents adjacentes est complètement ou partiellement rempli d'un matériau qui présente une plus grande résistance magnétique que le matériau des dents.

11. Installation d'énergie éolienne ou hydraulique selon l'une quelconque des revendications précédentes,
**caractérisée en ce que**
le rotor est disposé à l'extérieur autour du stator ou à l'intérieur du stator.

12. Installation d'énergie éolienne ou hydraulique selon l'une quelconque des revendications précédentes,
**caractérisée en ce que**
l'hélice est connectée de manière solidaire en rotation au rotor du générateur.
